# EUROPEAN PATENT SPECIFICATION

(11) **EP 3 410 303 B1**
(45) Date of publication and mention of the grant of the patent: **15.12.2021**
(21) Application number: 17173538.4
(22) Date of filing: 30.05.2017
(51) Int. Cl.: G06F 11/22, G09G 3/00, G06T 7/00

(54) **METHOD, APPARATUS, AND COMPUTER PROGRAM FOR DETECTING FAILURE OF AN OUTPUT ELEMENT OF A DISPLAY**
VERFAHREN, VORRICHTUNG UND COMPUTERPROGRAMM ZUR FEHLERERKENNUNG EINES AUSGABEELEMENTS EINER ANZEIGE
PROCÉDÉ, APPAREIL ET PROGRAMME INFORMATIQUE DE DÉTECTION DE PANNE D'UN ÉLÉMENT DE SORTIE D'UN AFFICHEUR

(43) Date of publication of application: 05.12.2018
(73) Proprietor: Vestel Elektronik Sanayi ve Ticaret A.S., 45030 Manisa (TR)
(72) Inventor: SAÍT ER, Alper, 45030 Manisa (TR); YILDIZ, Kadir, 45030 Manisa (TR)
(74) Representative: Flint, Adam

(56) References cited:
- WO-A1-03/005335
- US-B1- 6 219 443

## Description

### Technical Field

The present disclosure relates to a method, apparatus, and computer program for detecting failure of an output element of a display.

### Background

Display devices are used in a large variety of contexts for displaying various forms of content. For example, display screens are frequently being used in public to present visual information to the public. Display screens have been used in commercial advertisement, conveying public information, and for displaying entertainment products (such as films, etc.).

The document WO03/005335A discloses a method and a device for inspecting a display panel including capturing images of a portion of a plurality of display panels having display elements with an image acquisition device having sensor elements, each image comprising an image of approximately a first number of display elements captured with approximately a second number of sensor elements, the first number different from the second number, each image including a Moire artifact pattern, combining the images of the portions of the plurality of panels to form a reference image including a Moire artifact pattern reference, capturing a sample image of a portion of a sample display panel having display elements with image acquisition device, the sample image comprising an image of approximately the first number of display elements on the sample display captured with approximately the second number of sensor elements. The document US6219443A discloses a method and apparatus for detecting display defects including a camera for capturing an image of a display being inspected and processing circuitry for processing the captured image to determine whether or not the display being inspected is defective.

### 15 Summary

According to a first aspect disclosed herein, there is provided a method according to the appended independent claim 1.

Examples described herein enable a maintenance operator to quickly check whether a display is working correctly and whether it needs repair without the operator having to carry out a close and detailed inspection in person by eye.

The method may be a computer implemented method.

The notification may indicate a degree of importance of making a repair and/or replacement to the display.

The method may comprise selecting the at least one criterion in dependence on the type of the display. Said type of display may comprise at least one of: the size of the display, the size of the output elements of the display, and the pitch of the output elements;

The at least one criterion may comprise the total number of failed output elements.

The at least one criterion may comprise a distance between at least two failed output elements.

The at least one criterion may comprise the number of failed output elements within a predetermined area of the display.

According to a second aspect, there is provided an apparatus according to the appended independent claim 8.

The apparatus may comprise a camera configured to capture said image data.

The apparatus may comprise storage configured to store said test pattern and said criterion.

The apparatus may be configured such that the at least one criterion comprises the total number of failed output elements.

The apparatus may be configured such that the at least one criterion comprises a distance between at least two failed output elements.

The apparatus may be configured such that the at least one criterion comprises the number of failed output elements within a predetermined area of the display.

There may also be provided a computer program comprising computer-executable instructions, which when executed by a computer, cause the computer to perform a method as described above.

### Brief Description of the Drawings

To assist understanding of the present disclosure and to show how embodiments may be put into effect, reference is made by way of example to the accompanying drawings in which:
Figures 1A and 1B show schematically examples of failed output elements in a display;
Figure 2 shows schematically an example apparatus;
Figure 3 is a flow chart illustrating potential operations by a control apparatus; and
Figure 4 is a flow chart illustrating potential operations by the example control apparatus.

### Detailed Description

A display device is used to display an image, which may be a static and/or moving image. There are multiple types of display devices. All display devices comprise a plurality of output elements that cooperatively interact to form the image.

Three types of display devices are discussed below (i.e. display devices having different types of output elements). These types of display devices are merely used as an example to illustrate differences between different types of display devices.

A first type of display device uses an arrangement of plural differently coloured light sources for generating the displayed image. The light emitted by the light sources may be used directly to generate the displayed image. For example, a large billboard may use a large number of red, green and blue coloured LEDs (light emitting diodes), including, for example, OLEDs (organic light emitting diodes), to generate the displayed image.

In a second type of display device, light sources may be provided as part of a backlight unit, and the backlight unit is used to illuminate a number of individually controllable elements that are in front of the backlight unit. One type of display device that generates displayed images in this way is a liquid crystal display (LCD) display device. The individually controllable elements correspond to the pixels of the image. The controllable elements receive the light that is emitted by the light sources of the backlight unit and output either red, green or blue light. In the LCD display device, each controllable element includes a liquid crystal cell. The alignment of the liquid crystals in the liquid crystal cell is controllable such that an amount of light that is able to pass through the pixel can be controlled. By controlling the amount of light that is able to pass through each pixel, a desired image can be generated for display.

A third type of display device is a plasma display device. A plasma display device comprises an array of individually controllable elements that are configured to emit either red, green or blue light, depending on the colour of a coating applied to a pixel. Each element comprises a gas that, when a voltage is applied across the pixel, causes the gas to ionise, emitting UV light. The emitted UV light shines through the coating of the element, causing light to be emitted in the designated colour of the coating.

Output elements within a display device may fail for a number of reasons. This may be because, for example: the individually controllable element itself has failed in the case of, for example, an LCD screen; because the backlight has failed in the case of, for example, an LCD screen; or because the light source element has failed in the case of, for example, a plasma screen or an OLED screen.

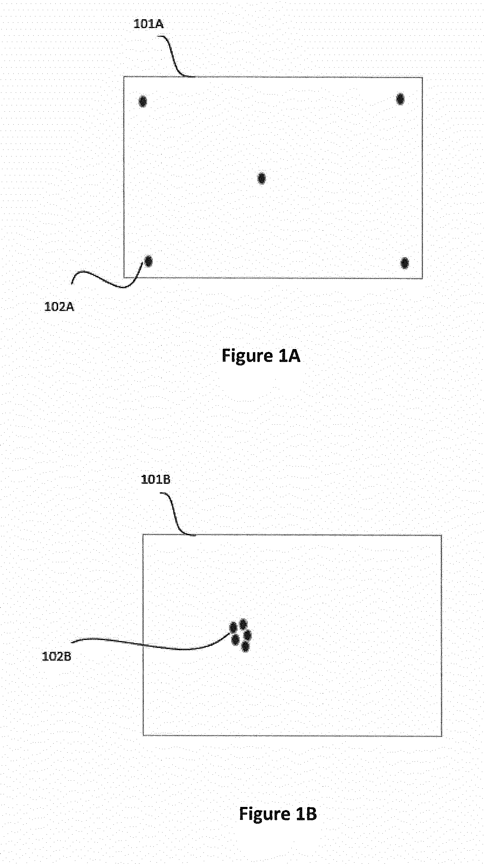

Depending on the display screen being considered, not every failure will necessitate a repair/replacement operation being carried out on the display screen. For example, there may be no need to perform an urgent repair if only one output element has failed in a relatively large-sized product with a small output element size and a small pitch size (the vertical and/or horizontal separation distance between centre points of adjacent output elements in a display). The location of the failed output elements in the display may also influence how important it is to replace or repair the display screen. This concept is, in part, illustrated with respect to Figures 1A and 1B.

Figure 1A depicts a rectangular display screen 101A having five failed output elements 102A. Four of these output elements 102A are located proximate to respective corners of the display screen 101A, whilst the fifth is located in the centre.

Figure 1B depicts a similar rectangular display screen 101B having five failed output elements 102B. In contrast to the arrangement shown in Figure 1A, the five failed output elements 102B of this example are closely clustered to each other.

As the failed output elements 102B are more closely clustered than the failed output elements 102A, they are more readily observable by a naked human eye. Therefore, the arrangement of Figure 1B may be deemed to be in need of repair more urgently than that of Figure 1A, despite them each having the same number of failed output elements.

There is presented an apparatus and method for evaluating whether or not output element failure(s) in a display screen necessitate a repair or replacement of the display screen.

Output element failure is a particular problem with displays that rely on LEDs for forming at least part of the output element (for example, the first and second types of display devices discussed above). Therefore, the following discusses specific examples relating to when the output elements are LEDs. However, it is understood that the same mechanisms may be applied when other devices or arrangements are used to form or provide at least part of the output elements of a display device (e.g. liquid crystal and/or plasma cells) fail.

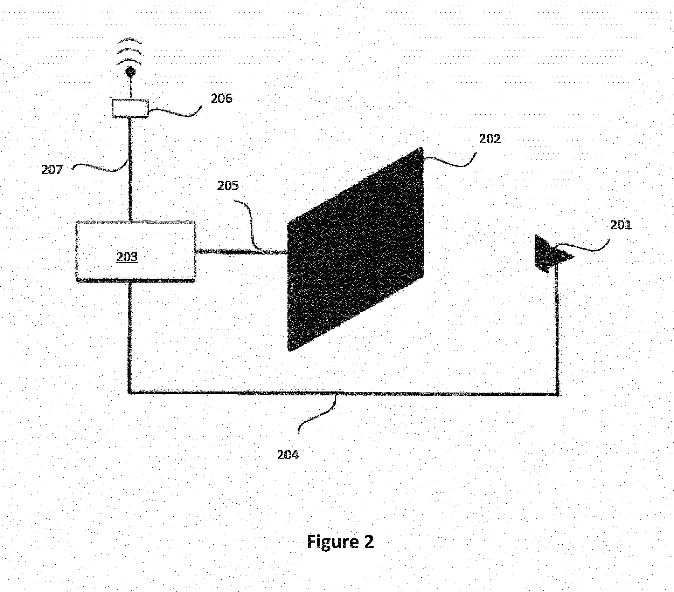

An example apparatus for implementing aspects of the present disclosure is now provided with reference to Figure 2.

Figure 2 depicts a camera 201 that faces a display 202. The camera 201 is configured to communicate with control apparatus 203 over communication link 204. The control apparatus 203 is configured to communicate with the display 202 over communication link 205, and with a transmitter 206 over communication link 207. The communication links 204, 205 and 207 may each be wired or wireless, depending on the particular implementation. Any suitable communication protocol may be used for the communication links 204, 205 and 207, depending on the actual implementation. The communication links 204, 205 and 207 do not need to operate according to the same communication protocol.

In operation, the display 202 is configured to output a test pattern. As mentioned above, in the example apparatus of Figure 2, there is a communication link 205 between the display 202 and the control apparatus 203. This communication link may be used by the control apparatus 203 to instruct the display 202 to output the test pattern. Thus the display 202 may be configured to output an image that is intended to have a predetermined form at a particular time instance.

The camera 201 is configured to capture image data representative of the output of the display 202 at the particular time instance. This image data includes any gaps in the output of the display 202, such as may be caused by a failed LED. The image data is subsequently transmitted to the control apparatus 203 over communication link 204.

On receipt of the image data, the control apparatus 203 is configured to analyse the image data with respect to the test pattern to determine if there are any failed LEDs in the display 202 and their respective locations. Knowing the intended output of the display 202 (i.e. the test pattern) allows the control apparatus 203 to more readily determine whether or not there are any failed LEDs in the display and also their locations in the display. If at least one failed LED is detected, the control apparatus 203 is configured to retrieve from storage at least one criterion associated with the display. The at least one criterion is associated with a specific type of display (for example, specific models of displays may have their own respective criteria). The at least one criterion classifies the severity of the detected failures. The at least one criterion may classify the severity such that an operator is advised to repair and/or replace the display 202 urgently or non-urgently.

The criteria may be based on for example the total number of failed LEDs or other output elements. The criteria may be based on for example the location of any failed LEDs or other output elements. The criteria may be based on for example a number of failed LEDs or other output elements and the distance between them. As a particular example and discussed in part above, if there are just a few failed LEDs and they are widely separated, then these may be regarded as not a severe failure, meaning that prompt replacement or repair is not required. As another example, there may be a number of failed LEDs and they are not closely spaced, but nevertheless there is a large total number of failed LEDs which may be noticeable, meaning that prompt replacement or repair is required. As another example, there may be a (small) number of failed LEDs and they are closely spaced, which is likely to be noticeable, meaning that prompt replacement or repair is required.

The stored criteria may be associated with a number of physical dimensions of the display. For example, a display screen having a first size may have different criteria to a display screen having a second (different) size. As another example, a display screen having output elements of a first size (and/or a first pitch length) may have different criteria to a display screen having output elements of a second (different) size (and/or a second (different) pitch length). The physical dimensions may define the type of display.

The stored criteria is defined with reference to what is discernible to a naked human eye at an intended "viewing" distance from the display screen. The intended viewing distance may represent the closest distance from which a user is likely to view the display.

The control apparatus 203 is configured to evaluate the analysed image data to determine if any of the criteria for the display are fulfilled. The control apparatus 203 may be configured to only evaluate the image data with respect to the at least one criterion if there is at least one failed LED. If any of the criteria for the display are fulfilled, the control apparatus 203 is configured to cause a notification of this to be transmitted to an operator to alert the operator of the severity of the failure of the display screen as a whole. The severity of the failure(s) indicates an importance of a repair/replacement to be carried out. The notification may be transmitted by transmitter 206 following receipt of this notification over communication link 207 from control apparatus 203.

For example, the notification may comprise a single bit that indicates whether or not a repair is unimportant or highly important. Transmitting a notification that indicates a degree of urgency of repair and/or replacement of the display means that the image data does not need to be transmitted to an operator for a separate assessment.

The notification may be transmitted to an operator using any suitable communication protocol. Example communication protocols include GSM (Global System for Mobile Communications), WiFi (as defined by IEEE 802.11), Bluetooth, etc.

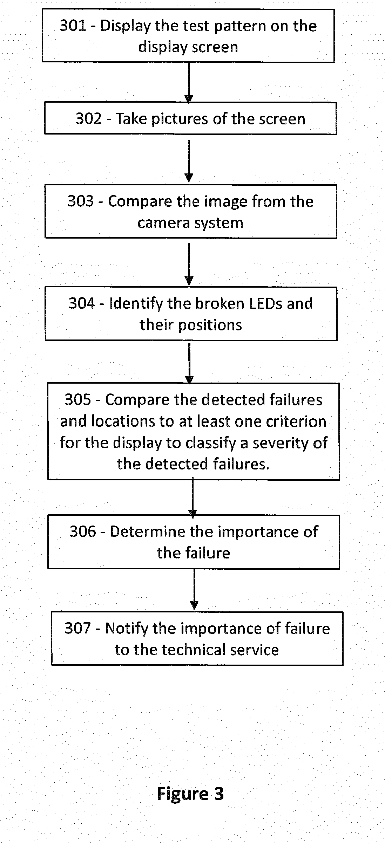

The operation of this apparatus may be as described in relation to Figure 3.

At 301, the display 202 is configured to display a predetermined test pattern. The test pattern may be pre-stored in the display 202 at manufacture or transmitted to the display 202 whilst in operation. If the test pattern is transmitted to the display 202, the test pattern may comprise some timing indicator regarding when the test pattern should be played out. The test pattern may be played out immediately, or at some later time. The test pattern may be transmitted to the display 202 from the control apparatus 203 over link 205, or from some other communication entity (not shown) using some other communication link.

At 302, the camera 201 is configured to take a picture of the display 202 when the test pattern is being presented on the display. The camera 201 may take the picture at a predetermined time. The camera 201 may be triggered to take a picture by control apparatus 203 over communication link 204. The camera 201 may take a picture immediately on receipt of said trigger. The camera 201 may take a picture some time after receipt of said trigger. The time delay between taking a picture and receiving said trigger may be predetermined or signalled to the camera with the trigger. The picture is transmitted to the control apparatus 203 as image data.

At 303, the control apparatus 203 is configured to analyse the received image data.

At 304, the control apparatus 203 is configured to identify, in the analysed image data, any failed LEDs in the display 202 and the positions or locations of the failed LEDs. The control apparatus 203 carries this out by comparing the captured image with the test pattern which is known to the control apparatus 203.

At 305, the control apparatus 203 is configured to compare the detected failures and locations to at least one criterion for the display to classify a severity of the detected failures.

As discussed above, the at least one criterion may include the total number of failed LEDs or other output elements. The criteria at least one criterion be based on for example the location of any failed LEDs or other output elements. The at least one criterion may be based on for example a number of failed LEDs or other output elements and the distance between them.

As a particular example and discussed above, if there are just a few failed LEDs in total (say less than 5 or less than 10 or so) and they are widely separated, then these may be regarded as not a severe failure, meaning that prompt replacement or repair is not required. As another example, there may be a number of failed LEDs and they are not closely spaced, but nevertheless there is a large total number of failed LEDs (say more than 50 or more than 100) which may be noticeable, meaning that prompt replacement or repair is required. As another example, there may be a (small) number of failed LEDs (say less than 5 or less than 10 or so) and they are closely spaced, which is likely to be noticeable, meaning that prompt replacement or repair is required. To give some idea of scale, the LEDs or other output elements may have a 1mm size with a pitch of 5mm. The control apparatus may be configured to consider the number of broken LEDs in a small area, for example a 5cm x 5cm area, or a larger area, for example a 1m by 1m area, especially for large displays. The number of broken LEDs in a particular area may be used as a criterion. These examples are purely illustrative, and other sizes and/or shapes of a specific region may be considered. The criterion or criteria may be specific to the specific (type of) display and different displays may have different criteria.

At 306, the control apparatus 203 is configured to determine the importance of the LED failure(s), i.e. to classify the severity of the failure(s). This may be done by for example determining if a criterion has been met and/or how many, and which, criteria are fulfilled. The importance may be classified into separate categories. For example, a failure region may be classified as being "unimportant", "low importance", "medium importance" and "high importance". As another example, a failure region may be classified as being "low importance" or "high importance", with failure regions classed as "high importance" being more in need of a repair/replacement than a failure region classed as "low importance". The importance of the LED failure indicates how observable the LED failures are considered to be by a naked human eye, such the higher the importance level, the more observable the LED failures are considered to be.

At 307, the control apparatus 203 is configured to transmit a notification to a user/operator that notifies the user/operator of the importance of the LED failure of a display. The operator may prioritise the replacement of those displays for which notifications were received indicating higher importance levels for replacement.

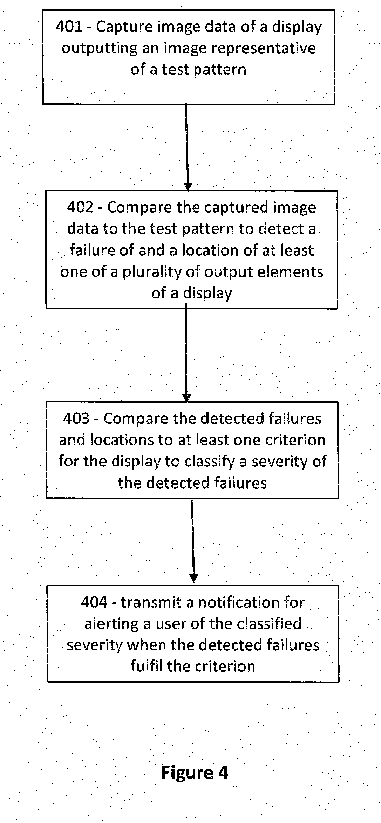

Figure 4 is a flow chart illustrating potential operations of the control apparatus 202.

At 401, the control apparatus is configured to capture image data of a display that is displaying an image corresponding to a test pattern. In other words, the apparatus is configured to cause a camera to capture image data of a display outputting a test pattern.

At 402, the control apparatus is configured to compare the captured image data to the test pattern to detect a failure of and a location of at least one of a plurality of output elements of a display.

At 403, the control apparatus is configured to compare the detected failures and locations to at least one criterion for the display to classify a severity of the detected failures.

At 404, the control apparatus is configured to transmit a notification for alerting a user of the classified severity when the detected failures fulfil the criterion.

In the above, references are made to LEDs and "output elements". These terms are used interchangeably to denote an element forming at least part of a pixel of a display screen. Consequently, disclosures made above relating to LEDs are not limited to LEDs, and may be applied to any element forming a pixel of a display screen.

In the above, references are made to failed LEDs and the like. This term covers those LEDs that are not functioning as intended by the display. For example, those LEDs that are instructed to output a particular colour of light, and instead output a different colour light, and/or those LEDs that fail to output any light at all.

In the above, various entities are described (e.g. control apparatus 203, display 202, camera 201, etc.). It is understood that each of these entities may be embodied, at least in part, by at least one processor and at least one memory comprising computer code. The computer code, when run on the respective at least one processor, causes the above-described operations to be performed.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the

## Claims

1. A method comprising:
providing a predetermined test pattern to a display (202) to cause it to display an image corresponding to the predetermined test pattern;
capturing (401) image data of the display (202) that is displaying the image corresponding to the predetermined test pattern;
comparing (402) the captured image data to the predetermined test pattern to detect a failure of and a location of at least one of a plurality of output elements of the display (202);
comparing (403) the detected failures and locations to at least one criterion for the display (202) to classify a severity of the detected failures; and
transmitting (404) a notification for alerting a user of the classified severity when the detected failures fulfil the criterion;
wherein the criterion is defined with reference to what is discernible to a naked human eye at an intended viewing distance from the display (202).

2. A method according to claim 1, wherein the notification indicates a degree of importance of making a repair and/or replacement to the display.

3. A method according to claim 1 or 2, comprising selecting the at least one criterion in dependence on the type of the display.

4. A method according to claim 3, wherein said type of display comprises at least one of:
the size of the display;
the size of the output elements of the display; and
the pitch of the output elements.

5. A method according to any to any of claims 1 to 4, wherein the at least one criterion comprises the total number of failed output elements.

6. A method according to any to any of claims 1 to 5, wherein the at least one criterion comprises a distance between at least two failed output elements.

7. A method according to any to any of claims 1 to 6, wherein the at least one criterion comprises the number of failed output elements within a predetermined area of the display.

8. An apparatus comprising at least one processor and at least one memory comprising computer code that, when executed by the at least one processor, causes the apparatus to at least:
store a predetermined test pattern;
capture (401) image data of a display (202) that is displaying an image corresponding to the predetermined test pattern;
compare (402) the captured image data to the predetermined test pattern to detect a failure of and a location of at least one of a plurality of output elements of the display (202);
compare (403) the detected failures and locations to at least one criterion for the display (202) to classify a severity of the detected failures; and
transmit (404) a notification for alerting a user of the classified severity when the detected failures fulfil the criterion;
wherein the criterion is defined with reference to what is discernible to a naked human eye at an intended viewing distance from the display (202).

9. An apparatus according to claim 8, comprising a camera configured to capture said image data.

10. An apparatus according to claim 8 or 9, comprising storage configured to store said predetermined test pattern and said criterion.

11. An apparatus according to any of claims 8 to 10, configured such that the at least one criterion comprises the total number of failed output elements.

12. An apparatus according to any of claims 8 to 11, configured such that the at least one criterion comprises a distance between at least two failed output elements.

13. An apparatus according to any to any of claims 8 to 12, configured such that the at least one criterion comprises the number of failed output elements within a predetermined area of the display.

14. A computer program comprising computer-executable instructions, which when executed by a computer, cause the computer to perform each of the method steps of any of claim 1 to 7.

## Patentansprüche

1. Verfahren, aufweisend:
Vorsehen eines vorbestimmten Testmusters an einer Anzeige (202), um sie ein dem vorbestimmten Testmuster entsprechendes Bild anzeigen zu lassen;
Erfassen (401) von Bilddaten der Anzeige (202), die das dem vorbestimmten Testmuster entsprechende Bild anzeigt;
Vergleichen (402) der erfassten Bilddaten mit dem vorbestimmten Testmuster, um einen Fehler und einen Ort wenigstens eines von mehreren Ausgabeelementen der Anzeige (202) zu detektieren;
Vergleichen (403) der detektierten Fehler und Orte mit wenigstens einem Kriterium für die Anzeige (202), um einen Schweregrad der detektierten Fehler zu klassifizieren; und
Übertragen (404) einer Benachrichtigung zum Warnen eines Benutzers über den klassifizierten Schweregrad, wenn die detektierten Fehler das Kriterium erfüllen;
wobei das Kriterium unter Bezug darauf definiert ist, was für ein offenes menschliches Auge in einem geplanten Augenabstand von der Anzeige (202) erkennbar ist.

2. Verfahren nach Anspruch 1, bei welchem die Benachrichtigung einen Grad an Wichtigkeit des Machens einer Reparatur und/oder Austausches an der Anzeige anzeigt.

3. Verfahren nach Anspruch 1 oder 2, aufweisend ein Auswählen des wenigstens einen Kriteriums in Abhängigkeit von der Art der Anzeige.

4. Verfahren nach Anspruch 3, bei welchem die Art der Anzeige wenigstens eines aufweist von:
der Größe der Anzeige;
der Größe der Ausgabeelemente der Anzeige; und
des Abstandes der Ausgabeelemente.

5. Verfahren nach einem der Ansprüche 1 bis 4, bei welchem das wenigstens eine Kriterium die Gesamtzahl der fehlgeschlagenen Ausgabeelemente aufweist.

6. Verfahren nach einem der Ansprüche 1 bis 5, bei welchem das wenigstens eine Kriterium einen Abstand zwischen wenigstens zwei fehlgeschlagenen Ausgabeelementen aufweist.

7. Verfahren nach einem der Ansprüche 1 bis 6, bei welchem das wenigstens eine Kriterium die Anzahl von fehlgeschlagenen Ausgabeelementen innerhalb eines vorbestimmten Bereichs der Anzeige aufweist.

8. Vorrichtung mit wenigstens einem Prozessor und wenigstens einem Speicher, der einen Computercode aufweist, der bei Ausführung durch den wenigstens einen Prozessor die Vorrichtung veranlasst, um wenigstens:
ein vorbestimmtes Testmuster zu speichern;
Bilddaten einer Anzeige (202), die ein dem vorbestimmten Testmuster entsprechendes Bild anzeigt, zu erfassen (401);
die erfassten Bilddaten mit dem vorbestimmten Testmuster zu vergleichen (402), um einen Fehler und einen Ort wenigstens eines von mehreren Ausgabeelementen der Anzeige (202) zu detektieren;
die detektierten Fehler und Orte mit wenigstens einem Kriterium für die Anzeige (202) zu vergleichen (403), um einen Schweregrad der detektierten Fehler zu klassifizieren; und
eine Benachrichtigung zum Warnen eines Benutzers über den klassifizierten Schweregrad zu übertragen (404), wenn die detektierten Fehler das Kriterium erfüllen;
wobei das Kriterium unter Bezug darauf definiert ist, was für ein offenes menschliches Auge in einem geplanten Augenabstand von der Anzeige (202) erkennbar ist.

9. Vorrichtung nach Anspruch 8, aufweisend eine Kamera, die ausgestaltet ist, um die Bilddaten zu erfassen.

10. Vorrichtung nach Anspruch 8 oder 9, aufweisend einen Speicher, der konfiguriert ist, um das vorbestimmte Testmuster und das Kriterium zu speichern.

11. Vorrichtung nach einem der Ansprüche 8 bis 10, die so konfiguriert ist, dass das wenigstens eine Kriterium die Gesamtzahl der fehlgeschlagenen Ausgabeelemente aufweist.

12. Vorrichtung nach einem der Ansprüche 8 bis 11, die so konfiguriert ist, dass das wenigstens eine Kriterium einen Abstand zwischen wenigstens zwei fehlgeschlagenen Ausgabeelementen aufweist.

13. Vorrichtung nach einem der Ansprüche 8 bis 12, die so konfiguriert ist, dass das wenigstens eine Kriterium die Anzahl von fehlgeschlagenen Ausgabeelementen innerhalb eines vorbestimmten Bereichs der Anzeige aufweist.

14. Computerprogramm mit computerausführbaren Anweisungen, welche bei Ausführung durch einen Computer den Computer jeden der Verfahrensschritte nach einem der Ansprüche 1 bis 7 durchführen lassen.

## Revendications

1. Procédé consistant à :
fournir un motif de test prédéterminé à un affichage (202) pour l'amener à afficher une image correspondant au motif de test prédéterminé ;
capturer (401) des données d'image de l'affichage (202) qui affiche l'image correspondant au motif de test prédéterminé ;
comparer (402) les données d'image capturées avec le motif de test prédéterminé pour détecter une défaillance et un emplacement d'au moins l'un d'une pluralité d'éléments de sortie de l'affichage (202) ;
comparer (403) les défaillances et emplacements détectés avec au moins un critère destiné à l'affichage (202) afin de classer une gravité des défaillances détectées ; et
transmettre (404) une notification destinée à alerter un utilisateur de la gravité classée lorsque les défaillances détectées remplissent le critère,
dans lequel le critère est défini par rapport à ce qui est discernable à l'œil nu d'un être humain à une distance de vision déterminée de l'affichage (202).

2. Procédé selon la revendication 1, dans lequel la notification indique un degré d'importance de faire une réparation sur l'affichage et / ou un remplacement de l'affichage.

3. Procédé selon la revendication 1 ou 2, consistant à sélectionner ledit au moins un critère en fonction du type d'affichage.

4. Procédé selon la revendication 3, dans lequel ledit type d'affichage comprend au moins l'un de :
la taille de l'écran ;
la taille des éléments de sortie de l'affichage ; et
le pas des éléments de sortie.

5. Procédé selon l'une quelconque des revendications 1 à 4, dans lequel ledit au moins un critère comprend le nombre total d'éléments de sortie défaillants.

6. Procédé selon l'une quelconque des revendications 1 à 5, dans lequel ledit au moins un critère comprend une distance entre au moins deux éléments de sortie défaillants.

7. Procédé selon l'une quelconque des revendications 1 à 6, dans lequel ledit au moins un critère comprend le nombre d'éléments de sortie défaillants dans une aire prédéterminée de l'affichage.

8. Appareil comprenant au moins un processeur et au moins une mémoire qui comprend un code informatique qui, lorsqu'il est exécuté par ledit au moins un processeur, amène l'appareil à au moins :
stocker un motif de test prédéterminé ;
capturer (401) des données d'image d'un affichage (202) qui affiche une image correspondant au motif de test prédéterminé ;
comparer (402) les données d'image capturées avec le motif de test prédéterminé pour détecter une défaillance et un emplacement d'au moins l'un d'une pluralité d'éléments de sortie de l'affichage (202) ;
comparer (403) les défaillances et emplacements détectés avec au moins un critère destiné à l'affichage (202) afin de classer une gravité des défaillances détectées ; et
transmettre (404) une notification destinée à alerter un utilisateur de la gravité classée lorsque les défaillances détectées remplissent le critère,
dans lequel le critère est défini par rapport à ce qui est discernable à l'œil nu d'un être humain à une distance de vision déterminée de l'affichage (202).

9. Appareil selon la revendication 8, comprenant une caméra qui est configurée pour capturer lesdites données d'image.

10. Appareil selon la revendication 8 ou 9, comprenant un stockage qui est configuré pour stocker ledit motif de test prédéterminé et ledit critère.

11. Appareil selon l'une quelconque des revendications 8 à 10, lequel est configuré de telle sorte que ledit au moins un critère comprend le nombre total d'éléments de sortie défaillants.

12. Appareil selon l'une quelconque des revendications 8 à 11, lequel est configuré de telle sorte que ledit au moins un critère comprend une distance entre au moins deux éléments de sortie défaillants.

13. Appareil selon l'une quelconque des revendications 8 à 12, lequel est configuré de telle sorte que ledit au moins un critère comprend le nombre d'éléments de sortie défaillants dans une aire prédéterminée de l'affichage.

14. Programme informatique comprenant des instructions exécutables par ordinateur qui, lorsqu'elles sont exécutées par un ordinateur, amènent l'ordinateur à effectuer chacune des étapes du procédé selon l'une quelconque des revendications 1 à 7.
